# EUROPEAN PATENT APPLICATION

(11) **EP 4 663 484 A1**
(43) Date of publication of application: **17.12.2025**
(21) Application number: 24182398.8
(22) Date of filing: 14.06.2024
(51) Int. Cl.: B60R 9/06

(54) **INFLATABLE CARGO BOX**

(71) Applicant: Mont Blanc Industri AB, 516 90 Dalsjöfors (SE)
(72) Inventor: PORTAL, Younick, 516 90 DALSJÖFORS (SE); Sebbar, Samir, 516 90 DALSJÖFORS (SE)
(74) Representative: AWA Sweden AB

(57) **Abstract**

The disclosure relates to an inflatable cargo box (1) adapted to be mounted on a towball carrier (200), the inflatable cargo box (1) comprising:
a base portion (100) and at least one side portion (101), wherein the base portion and/or the at least one side portion (100, 101) is formed by a double wall structure comprising an inner wall (10a) and an outer wall (10b), wherein the inner wall (10a) is connected to the outer wall (10b) so as to define at least one enclosed space (11) therebetween, wherein the inner wall (10a) or the outer wall (10b) is provided with at least one valve (23) configured to permit fluid into the enclosed space (11) so as to bring the inflatable cargo box (1) to an inflated state;
a first mounting portion (12) provided to the base portion or the at least one side portion (100, 101), the first mounting portion (12) configured to receive at least a first portion (201) of the towball carrier (200); wherein
the inner wall (10a), in the inflated state, is facing a cargo space (13), the cargo space (13) being accessible through a cargo opening (14), the inflatable cargo box (1) being provided with a lid (15) configured for at least partially covering the cargo opening (14).

## Description

### Technical Field

The invention relates to an inflatable cargo box adapted to be mounted on a towball carrier.

### Technical Background

A common external storage container designed for mounting on a vehicle is the rooftop cargo carrier. This carrier is typically affixed to the roof of the vehicle, providing additional space for carrying luggage, equipment such as skis and snowboards, and other items. It proves especially useful when the interior of the vehicle is limited or when you want to free up space inside the car.

An alternative storage solution is the towbar-mounted storage container. The towbar-mounted container is most often attached to a specific towbar carrier. Alternatively, the storage container itself may have an integrated carrier designed for mounting directly onto the towbar.

Both rooftop cargo carriers and towbar-mounted storage containers share a common feature: they are typically constructed from durable and rigid materials capable of withstanding outdoor conditions while safeguarding items stored therein. Some alternative materials used include High-Density Polyethylene, ABS (Acrylonitrile Butadiene Styrene), Fiberglass-Reinforced Plastic, and Aluminium.

When designing external storage for vehicles, weight should be considered as a critical criterion. Weight impacts both fuel consumption and user-friendliness. Therefore, material selection plays a fundamental role in the overall design.

A downside of existing external storage containers is that they tend to be bulky, making the containers cumbersome to store when not in use. Additionally, securing the container to a specific carrier can be challenging.

Moreover, the towbar carrier may serve no other purpose beyond mounting the storage container. As a result, it lacks versatility, and users might find themselves needing to acquire multiple towbar carriers, each designed for different purposes.

### Summary

It is an object of the invention to provide an inflatable cargo box addressing at least some of the design criteria that the cargo box should be durable, lightweight, and easy to store when not in use.

According to a first aspect of the present disclosure, an inflatable cargo box adapted to be mounted on a towball carrier, the inflatable cargo box comprising:
a base portion and at least one side portion, wherein the base portion and/or the at least one side portion is formed by a double wall structure comprising an inner wall and an outer wall, wherein the inner wall is connected to the outer wall so as to define at least one enclosed space therebetween, wherein the inner wall or the outer wall is provided with at least one valve configured to permit fluid into the enclosed space so as to bring the inflatable cargo box to an inflated state;
a first mounting portion provided on the base portion or the at least one side portion, the first mounting portion configured to receive at least a first portion of the towball carrier; wherein
the inner wall, in the inflated state, is facing a cargo space, the cargo space being accessible through a cargo opening, the inflatable cargo box being provided with a lid configured for at least partially covering the cargo opening.

Hereby, an inflatable cargo box which is lightweight is provided. Further, by having the at least one mounting portion configured to receive the at least a first portion of the towball carrier, the inflatable cargo box may utilise an already existing portion of the towball carrier for fastening the inflatable cargo box to the towball carrier. Hence, a more functional and easy to use cargo box is provided.

It is to be noted that at least a portion of the inflatable cargo box is inflatable, e.g., the base portion and/or the at least one side portion. That is, the entirety of the inflatable cargo box may be inflatable. This entails that both the base portion and each side portion is formed by a double wall structure defining at least one enclosed space.

As the base portion and/or the at least one side portion is inflatable, the respective portion can be made out of an airtight textile, a flexible plastic material, or any other lightweight material suitable to be used for an inflatable product.

Another advantage is that when the inflatable cargo box is not in an inflated state, i.e., in a deflated state, the cargo box can easily be stored e.g., in the truck of the car, or on a shelf.

To this end, the inflatable cargo box, in a deflated state, may be bringable to a folded state in which the inflatable cargo box occupies a volume that corresponds to at most 20%, or at most 15%, or at most 10%, or at most 5% of a volume occupied by the inflatable cargo box in said inflated state.

The cargo box, in the deflated state, may be brought to the folded state in a variety of ways. For example, it may be folded along a longitudinal axis thereof. In the folded state, the cargo box may be secured with a securing strap. Moreover, the cargo box may be arranged in a storing bag. The storing bag can be used to store the cargo box when not in use and protects the cargo box from external contamination.

The term "inflated state" of the present disclosure is to be understood as a state where the inflatable cargo box has been provided with a fluid, permitted through the at least one valve such that fluid is present in the at least one enclosed space such that the at least one enclosed space is filled with fluid to such an extent that the wall structure is provided with enough stiffness so as to define a cargo space suitable for storing cargo. It is to be noted that the inflatable cargo box may achieve sufficient stiffness to define a cargo space when the enclosed space has reached 50%, or 75%, or 90% of its maximum volume.

The base portion may be referred to as a bottom portion of the inflatable cargo box. The base portion, in a mounted state of the inflatable cargo box, may be configured to be arranged on the towball carrier. When the inflatable cargo box is mounted on the towball carrier, the outer wall of the base portion may face the towball carrier.

The at least one side portion may be referred to as a side wall of the inflatable cargo box.

The side walls of the cargo box may be formed by a respective side portion, e.g., a first, second, third, and fourth side portion, wherein each side portion is formed by the double wall structure. In such a variant of the inflatable cargo box, the plurality of side portions may together form at least one enclosed space, or each side portion may form a separate encloses space. If each side portion form a separate enclosed space, each side portion may be provided with a valve.

When an inflatable cargo box comprises more than one side portion, each side portion may be connected to another side portion along a side edge thereof. That is, a first and second side portion may be connected along respective side edges.

The at least one side portion may be connected to the base portion at a horizontally extending edge of the respective side portion, as seen in an inflated and mounted state of the cargo box. Put in other words, the at least one side portion may be connected to the base portion at a side edge thereof being transversal to the side edge arranged to be connected to another side portion.

The inner and the outer wall may define at least two enclosed spaces, wherein the at least two enclosed spaces may be fluidly isolated from each other, and wherein the inner wall or the outer wall is provided with two valves, each valve being configured to permit fluid into a respective enclosed space.

In such a variant of the inflatable cargo box, the inner and outer wall may be connected to each other at an attachment zone such that the separate enclosed spaces are formed. The attachment zone may be an area of where the inner and outer wall are attached to each other by being e.g., welded, adhesively attached, or sewn.

The base portion and the at least one side portion may be formed by the double wall structure, and wherein one of the at least two enclosed spaces may be provided in the base portion whereas another of the at least two enclosed spaces may be provided in the side portion.

Alternatively, or additionally, separate enclosed spaces being fluidly isolated from each other may be formed by separate cargo box parts, which cargo box parts are subsequently connected. Each separate cargo box part may comprise a double wall structure comprising an inner and an outer wall. The separate cargo box part can be connected to another separate cargo box part such that the inflatable cargo box can be formed by a plurality of separate cargo box parts. At least one separate cargo box part may form the base portion, and at least one separate cargo box part may form the at least one side portion.

Separate box parts may be connectable in a variety of ways. For example, separate box parts may be connected by zippers. Alternatively, the separate box parts may be connected to each other by sewing, for example sewing the separate box parts together along at least a portion of an edge of each separate box part. Alternatively, the separate box part may be connected to each other adhesively, for example along at least a portion of an edge of each separate box part.

It is to be noted that an inflatable cargo box comprising a plurality of enclosed spaces being fluidly isolated from each other, each enclosed space comprises a valve arranged in the inner wall or the outer wall, each valve being configured to permit fluid into a respective enclosed space.

Preferably, the at least one valve is provided in the inner wall to make it difficult for unauthorized people to tamper with the valve.

The at least one valve may be a Pressure Relief Valve, PRV, a Boston valve, Halkey Roberts valve, or any other type of valve commonly known in the art and suitable for an inflatable product.

The first mounting portion may comprise at least one mounting opening, wherein the at least one mounting opening is configured to receive the at least a first portion of the towball carrier.

The first mounting portion may comprise a variety of elements configured to receive a portion of the towball carrier, for example, the first mounting portion may comprise at least one mounting opening, or the first mounting portion may comprise at least one tie-down ring, or any other type of mean that serves the purpose of being an anchoring point.

The mounting portion may for example be provided on and protruding from an outward facing wall of the base portion. The mounting opening may be provided as a through-hole in the mounting portion, for example extending parallel to the outwards facing wall of the base portion.

Additionally or alternatively, the base portion and/or the at least one side portion may be formed by a double wall structure, and wherein the first mounting opening may be arranged through the base portion or one of the at least one side portions.

The first mounting opening may be arranged through the base portion or a side portion such that the first portion of the towball carrier is permitted to be inserted through the first mounting opening such that it extends into the cargo space of the inflatable cargo box.

The first mounting portion may comprise at least one pair of mounting openings, each pair of mounting openings may be configured to receive a fastening member of the towball carrier so as to fixedly attach the inflatable cargo box to the towball carrier.

The mounting openings of the at least one pair of mounting openings may be located in proximity to each other. In other words, the mounting openings of the at least one pair of may be located in the range of 1 to 20 cm, preferably 5 to 10 cm relative to each other. The mounting openings 121a-b of each pair may be located relative each other such that a strap common in bike carriers may be inserted through both openings of the pair of openings so as to tie the inflatable cargo box to the towball carrier.

Each pair of mounting openings may be configured to receive a fastening member of the towball carrier such as a fastening strap or a tension strap.

The inflatable cargo box may comprise a second and/or a third mounting portion. The second and the third mounting portion may comprise at least one mounting opening arranged through the base portion or arranged through one of the at least one side portions, wherein the at least one mounting opening of the second and third mounting portion is, respectively, configured to receive at least a second or a third portion of the towball carrier.

Both the second and the third mounting portion may be arranged in the base portion or same side portion. Alternatively, the second mounting portion and the third mounting portion may be arranged in different base portions and/or side portions.

The first, second, and/or third mounting portion may comprise at least one mounting opening which may be configured to receive at least a first, a second, or a third portion of the towball carrier such that the inflatable cargo box is attached to the towball carrier. Thus, the inflatable cargo box may utilise an already existing portion of the towball carrier for fastening the inflatable cargo box to the towball carrier.

The first, second or third portion of the towball carrier may, e.g., be a fastening strap, or a part of the towball carrier which extends substantially vertically and can be inserted into the mounting opening of the inflatable cargo box.

The inflatable cargo box may comprise an eyelet or a protective arrangement at any of the mounting openings to protect the material of the double wall structure when the at least first, second or third portion of the towball carrier is inserted into the respective mounting opening.

The double wall structure comprises an inner wall and an outer wall, wherein the inner wall is connected to the outer wall so as to define at least one enclosed space therebetween. The inner wall and the outer wall may be connected at the first, second, and/or the third mounting opening by a peripheral wall of the mounting opening.

Alternatively, or additionally, the inner wall and the outer wall may be connected at the cargo opening by a peripheral wall of the cargo opening.

Alternatively, or additionally, the inner wall and the outer wall may be connected at each opening of the inflatable cargo box by a peripheral wall of the respective opening.

Alternatively, or additionally, the inner wall and the outer wall may be connected at an opening by having the inner wall and the outer wall joint together by using e.g., adhesives or welding.

The mounting openings and the cargo opening or any other type of opening which is arranged through the double wall structure, may be referred to as an opening.

Alternatively, or additionally, the first, second, and/or third mounting portion may comprise a mounting arrangement such as a tie-down ring, or any other type of mean that serves the purpose of being an anchoring point. In such a variant, the mounting arrangement is configured to receive the first, second and/or the third portion of the towball carrier, such as a strap or a similar fastener.

Alternatively, or additionally, the inflatable cargo box may be connected to the towball carrier by one or more snap-fit joints so as to facilitate quick and easy mounting and dismounting. In such a variant, the inflatable cargo box may comprise at least one first snap-fit part configured to be engaged with a second snap-fit part of the towball carrier. The first snap-fit parts may be located anywhere on the outer wall of the inflatable carrier, for example on the outer wall of the base portion and/or the side portions.

The inflatable cargo box may be put on top of the carrier and fastened thereto by means of at least one intermediate fastening member of the inflatable cargo box or the towball carrier.

The inner wall may comprise a cover portion arranged to cover the at least one mounting opening of the first, second and/or third mounting portion such that respective portion of the towball carrier may be covered when the inflatable cargo box is in a mounted state.

It is to be noted that one cover portion may cover several mounting openings of several mounting portions, or a respective cover portion may cover at least one mounting opening of a respective mounting portion.

The cover portion may protect the cargo placed into the cargo space from coming in contact with the respective portion of the towball carrier the inflatable cargo box is in a mounted state. This is advantageous since the portions of the towball carrier can be dirty or comprise sharp edges which may sully or damage the cargo.

It is to be noted that the cover portion is arranged such that when e.g., the second portion of the towball carrier is inserted into the at least one mounting opening of the second mounting portion the second portion of the towball carrier is located between the inner wall of the inflatable cargo box and the cover portion. In such a case, the second portion of the towball carrier is not visible from the inside of the inflatable cargo box.

The cover portion may be adhesively attached to the inner wall. The cover portion may be adhesively attached to the inner wall at at least one side portion and/or at the base portion along a periphery of the cover portion. Alternatively, the cover portion may removably attached to the inner wall, e.g., by the use of Velcro.

The cover portion may be connected to the inner wall at any suitable way such that the double wall structure keeps its inflatable properties.

The towball carrier may be a bike carrier configured to carry at least one bicycle.

An advantage of having the inflatable cargo box being adapted to be mounted on a bike carrier is that it provides for a cost-efficient product. The inflatable cargo box may be adapted to be mounted on to a bike carrier and a towball carrier which is specifically adapted for the inflatable cargo box. Thus, a user which already owns a bike carrier for the towball can use the inflatable cargo box of the present invention on the preowned carrier. A user not owning a bike carrier can choose to purchase either a bike carrier or a specific cargo box carrier for the inflatable cargo box.

That the cargo space is accessible through a cargo opening implies that cargo can be placed into the cargo space through the cargo opening.

The cargo opening may be provided in the double wall structure.

The cargo opening may be provided in at least one side portion.

The inflatable cargo box may comprise a top portion which may be formed by a double wall structure comprising an inner wall and an outer wall. The cargo opening may be provided in the top portion and/or at least one side portion.

The cargo opening may be provided in a portion of the inflatable cargo box not being formed by the double wall structure, such as a portion formed by a single wall structure made of e.g., flexible textile. In such a case, the lid may be connected to the single wall structure, such as a first portion of the lid may be fixedly connected to the single wall structure, and a second portion of the lid may be connectable to the single wall structure. The second portion of the lid may be connectable to the single wall structure by a at least one of a zipper, a button, or Velcro.

The inflatable cargo box is being provided with a lid configured for at least partially covering the cargo opening.

The lid enables that cargo which is placed within the cargo space is protected from environmental factors such as weather and dirt. The lid provides a safety measure such that cargo cannot fall out of the inflatable cargo box.

The lid may be formed by the double wall structure.

The lid may be made of a flexible textile.

Preferably, the lid covers the entire cargo opening such that the cargo opening is permitted to be a closed opening.

A first portion of the lid may be fixedly connected to the double wall structure, and a second portion of the lid may be connectable to the double wall structure. The second portion of the lid may be connectable to the double wall structure by a at least one of a zipper, a button, or Velcro.

The inflatable cargo box may comprise a lock arranged in e.g., the lid. In such a case, the lid may be arranged such that it can be locked in relation to the double wall structure such that only authorized people can open the inflatable cargo box. The lock may be arranged such that it locks the zipper connecting the lid and the double wall structure and such that the zipper cannot be opened without e.g., a key or a code.

The double wall structure may be formed of dropstitch material.

Dropstitch, also known as double-wall fabric, is a 3D construction process that involves thousands of yarns being simultaneously woven together to join a first and a second layer of fabric. Dropstitch materials facilitate the creation of inflatable structures with entirely flat surfaces, while ensuring enhanced rigidity and stability.

The material of the inner and/or outer wall of the inflatable cargo box may be of a waterproof material. The material of the inner and/or outer wall is preferably a durable material which is resistant to environmental impacts and preferably is not sun bleached during normal usage.

The material of the inner wall may be different from the material of the outer wall. The material of the inner and outer wall may be the same.

The lid and the double wall structure may be made out of the same material.

Preferably, but not necessary, the lid and the connection between the lid and the double wall structure is watertight.

The inner and outer wall may be formed by several layers of material which are joint together. In such a case, the stiches are formed between an outer layer of the respective inner and outer walls which faces each other.

The inflatable cargo box may comprise at least one mounting groove and/or at least one mounting protrusion, wherein the at least one mounting groove and/or the at least one mounting protrusion may have a shape corresponding to a respective fourth portion or a respective fifth portion of the towball carrier. The at least one mounting groove and/or protrusion may be configured to be placed relative said fourth or fifth portion.

The respective mounting protrusions may comprise one or more snap-fit parts configured to be engaged with a snap-fit part of the towball carrier so as to facilitate quick and easy mounting and dismounting.

The inflatable cargo box may comprise cargo fastening means arranged on the inner wall for securing cargo. Cargo can be secured by e.g., arranging a rope or a tension strap through the fastening mean. The fastening mean may be a tie-down ring, or any other type of mean that serves the purpose of being an anchoring point.

It may be noted that the use of first, second, third, fourth, fifth, etc. are mainly to be seen as labels facilitating reading and that it does not necessarily mean that there need to be all the intervening numbers of portions present. It may e.g., be noted that it is contemplated to have a design where there is a first portion, a second portion, a third portion and a fifth portion, with the fourth portion being omitted. However, to facilitate reading, we have consistently used the numbering first, second, third, fourth, etc., as labels, and in a sense based on a variant including all conceivable portions.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The invention will by way of example be described in more detail with reference to the appended schematic drawings, which shows a presently preferred embodiment of the invention.
Fig. 1 is a schematic perspective view of an inflatable cargo box in an inflated state and mounted to a towball carrier.
Fig. 2 is a schematic perspective view of the inflatable cargo box of Fig. 1 where the interior of the inflatable cargo box is shown in more detail.
Figs. 3a-c are detailed views of how a first and second portion of the towball carrier are received by a first and second mounting portion of the inflatable cargo box such that the inflatable cargo box is attached relative to the towball carrier.
Fig. 4 is a schematic perspective view of the inflatable cargo box of and the towball carrier as seen from a bottom view.
Fig. 5 is a schematic perspective rear view of an inflatable box having mounting portions having mounting which do not go through the double wall structure.
Fig. 6 is a schematic perspective view of a towball carrier.
Fig. 7 is a detailed view of the material of an inflatable cargo box.

### Detailed description

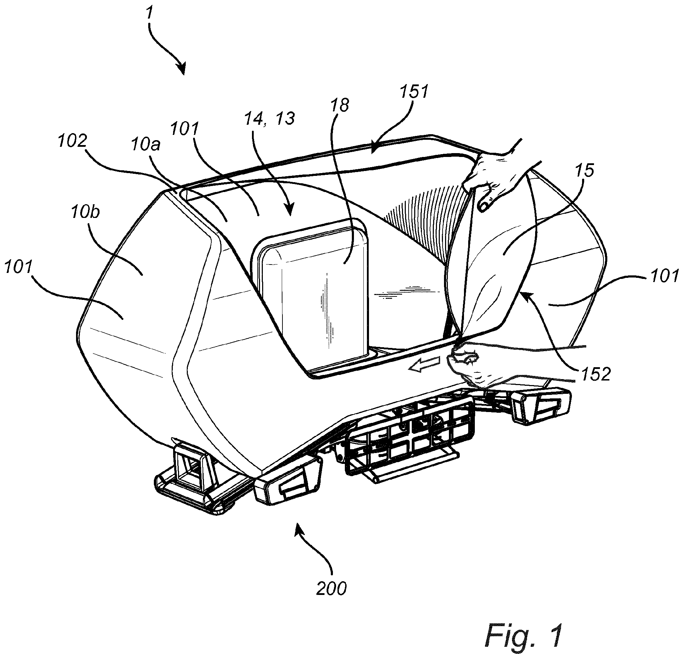

With reference to Figs. 1-7, there is shown an inflatable cargo box 1 adapted to be mounted on a towball carrier 200. The inflatable cargo box 1 is formed by a double wall structure comprising an inner wall 10a and an outer wall 10b, wherein the inner wall 10a is connected to the outer wall 10b so as to define one enclosed space 11 therebetween. The inflatable cargo box 1 comprises a base portion 100, four side portions 101, and a top portion 102. The base portion 100, the side portions 101 and the top portion 102 are formed by the double wall structure and having an inner wall 10a and an outer wall 10b. The inner wall 10a is connected to the outer wall 10b so as to define at least one enclosed space 11 therebetween.

With reference to Fig. 1, the inflatable cargo box 1 is mounted to the towball carrier 200 and where a first, second, and third portion 201, 202, 203a-b of the towball carrier 200 is received by a first, second and third mounting portion 12, 17, 19. Here, all of the base portion 100, the four side portions 101, and the top portion 102 are inflatable, and here shown in an inflated state. However, it is to be noted that, in an alternative variant, only a portion of the inflatable cargo box 1 is inflatable, e.g., the base portion 100 and/or the at least one side portion 101. This entails that all portions of the inflatable cargo box 1 are formed by a double wall structure defining at least one enclosed space 11. This may be the same double wall structure defining one single enclosed space 11, or the same double wall structure defining a plurality of enclosed spaces 11. The inflatable cargo box 1, in a deflated state, may be bringable to a folded state in which the inflatable cargo box 1 occupies a volume that corresponds to at most 20% of a volume occupied by the inflatable cargo box 1 in said inflated state.

The base portion 100 may be referred to as a bottom portion of the inflatable cargo box 1. The base portion 100, in a mounted state of the inflatable cargo box 1 as shown in Figs. 1-3c, is arranged on the towball carrier 200 and the outer wall 10b of the base portion 100 faces the towball carrier 200.

The at least one side portion 101 may be referred to as a side wall of the inflatable cargo box 1.

The side walls of the cargo box 1, as shown in Figs. 1-2, are formed by a respective side portion 101, i.e., a first, second, third, and fourth side portion 101. Each side portion 101 is formed by the double wall structure. In this variant of the inflatable cargo box 1, the plurality of side portions 101, the base portion 100, and the top portion 102 together form one enclosed space 11. In another variant, each side portion 101, each base portion 100, and each top portion 102 may form a separate encloses space 11. If each portion 100, 101, 102 forms a separate enclosed space 11, each portion 100, 101, 102 may be provided with a valve 23.

It is to be noted that the base portion 100, the at least one side portion 101, and the at least one top portion 102 may all be referred to as portions of the inflatable cargo box 1.

When an inflatable cargo box 1 comprises more a plurality of connectable portions, the portions may be connected to another portion along a side edge thereof. That is, for example, a first and second side portion 101 may be connected along respective side edges.

In an alternative variant of the inflatable cargo box 1, the at least one side portion 101 may be connected to the base portion 100 at a horizontally extending edge of the respective side portion 101, as seen in an inflated and mounted state of the inflatable cargo box 1. Put in other words, the at least one side portion 101 may be connected to the base portion 100 at a side edge thereof being transversal to the side edge arranged to be connected to another side portion 101.

If the inflatable cargo box 1 is formed by portions which respectively form separate enclosed spaces 11, the inner and outer wall 10a-b may be connected to each other at an attachment zone such that the separate enclosed spaces 11 are formed. The attachment zone may be an area of where the inner and outer wall 10a-b are attached to each other by being e.g., welded, adhesively attached, or sewn.

As seen in Fig. 1, the inner wall 10a is facing a cargo space 13. The cargo space 13 is accessible through a cargo opening 14. The cargo opening 14 is provided in the double wall structure of the inflatable cargo box 1.

The cargo opening 14, as shown in Figs. 1-3a, and 7, is provided in one side portion 101 and the top portion 102 of the inflatable cargo box 1.

The inflatable cargo box 1 is provided with a lid 15 configured to cover the cargo opening 14.

As seen in Fig. 1, the lid 15 is made of a flexible textile. Alternatively, the lid 15 is formed by the double wall structure.

A first portion 151 of the lid 15 is fixedly connected to the double wall structure, and a second portion 152 of the lid 15 is connectable to the double wall structure. The second portion 152 of the lid 15 is connectable to the double wall structure by a zipper, as seen in Fig. 1, such that the lid 15 covers the entire cargo opening 14, and such that the cargo opening 14 is permitted to be a closed opening. Alternatively, the lid could be formed by the double wall structure, and the second portion 152 of the lid 15 may be connectable to the double wall structure by a at least one of a button, or Velcro.

As seen in Fig. 1, the inner wall 10a comprises a cover portion 18 arranged to cover the one mounting openings 171, 191a-b of the second and third mounting portion 17, 19 such that the second and third portion 202, 203a-b of the towball carrier 200 is covered.

The cover portion 18 may protect the cargo placed into the cargo space 13 from coming in contact with the second and third portion 202, 203a-b of the towball carrier 200 the inflatable cargo box 1 is in a mounted state.

It is to be noted that the cover portion 18 is arranged such that when the second and third portion 202, 203a-b of the towball carrier 200 is inserted into the mounting openings 171, 191a-b of the second and third mounting portion 17, 19, the second and third portion 202, 203a-b of the towball carrier 200 is located between the inner wall 10a of the inflatable cargo box 1 and the cover portion 18. In such a case, the second and third portion 202, 203a-b of the towball carrier 200 is not visible from the inside of the inflatable cargo box 1.

The cover portion 18 may be adhesively attached to the inner wall 10a. The cover portion 18 may be adhesively attached to the inner wall 10a at least one side portion 101 and/or at the base portion 100 along a periphery of the cover portion 18. Alternatively, the cover portion 18 may removably attached to the inner wall 10a, e.g., by the use of Velcro.

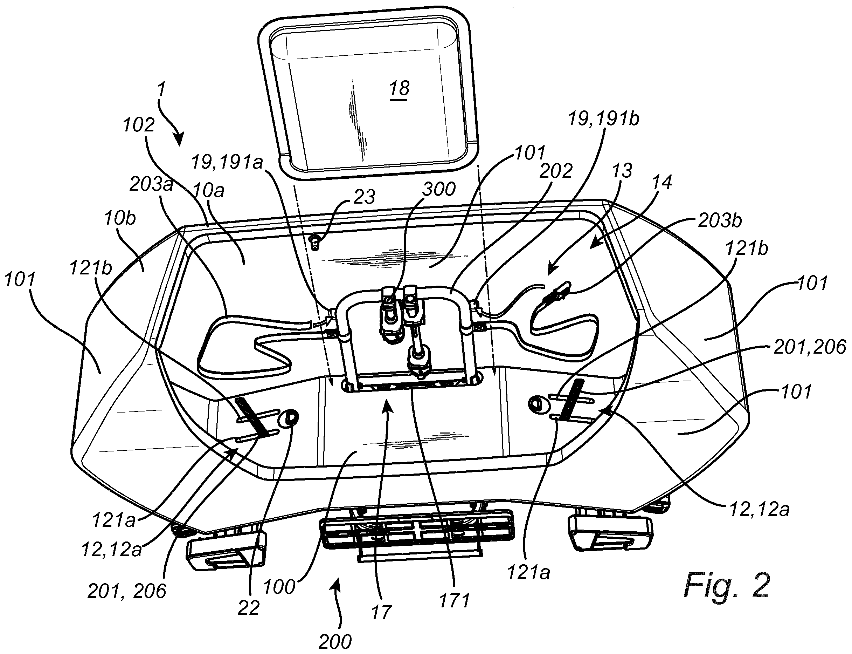

With reference to Fig. 2, the interior, i.e., the cargo space 13, of the inflatable cargo box 1 is shown in more detail. The bottom portion 100 of the inflatable cargo box 1 is provided with a second mounting portion 17. The second mounting portion 17 comprises one mounting opening 171 arranged through the base portion 100. The mounting opening 171 of the second mounting portion 17 is configured to receive a second portion 202 of the towball carrier 200. As is seen in Figs. 2, 4, and 6, the second portion 202 of the towball carrier 200 is an arched frame which comprises bicycle fastening means 300. The bicycle fastening means 300 may be any bicycle fastening means for retaining a bicycle, for example by clamping a frame portion thereof, as is well known in the art. The second portion 202 extends through the mounting opening 171 of the second mounting portion 17 and into the cargo space 13.

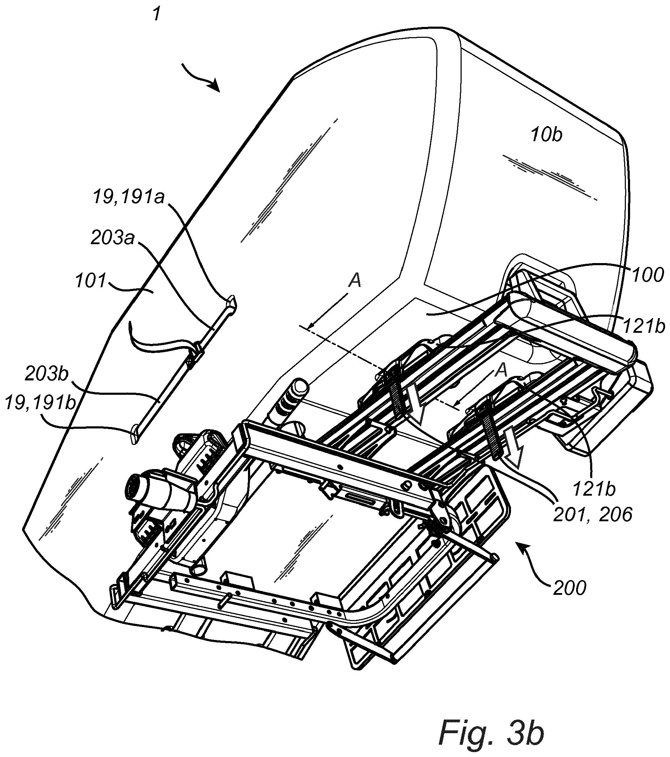

The third portion 203a-b of the towball carrier 200 are, as seen in Figs. 2, 3a, 4, and 6, two tension straps configured to be inserted through a respective mounting opening 191a-b of the third mounting portion 19 of the inflatable cargo box 1. The tension straps 191a-b are configured to be connected to each other outside of the cargo space 13 such that the inflatable cargo box 1 is fastened to the tow ball carrier 200, as shown in Fig. 3b.

As described above, when the inflatable cargo box 1 comprises a cover portion 18, the second and third portion 202, 203a-b of the towball carrier 200 is located between the inner wall 10a of the inflatable cargo box 1 and the cover portion 18.

It is to be noted that the second and third portion 202, 203a-b may be any other portion of the towball carrier 200 from what is described in relation to Figs. 2, 3a, 4, and 6.

As seen in Fig. 2, two pairs 12a of mounting openings 121a-b are provided in the base portion 100 of the inflatable cargo box 1. The mounting openings 121a-b of the pairs 12a of mounting openings 121a-b are located in proximity to each other. The mounting openings 121a-b of the at least one pair 12a may be located in the range of 1 to 20 cm, preferably 5 to 10 cm relative to each other. As seen in Figs. 1-3c, the mounting openings 121a-b of each pair are located relative each other such that a first portion 201 of the towball carrier 200 can be inserted through both openings of the pair 12a of mounting openings 121a-b so as to tie the inflatable cargo box 1 to the towball carrier 200.

It is to be noted that only two pairs 12a of mounting openings 121a-b are visible in Fig. 2, however the inflatable cargo box 1 comprises four pairs of mounting openings 121a-b, such that the inflatable cargo box 1 can be fastened to the towball carrier 200 at the base portion 100 at four fastening points. However, it may be sufficient with two fastening points in the base portion 100 to fasten the inflatable cargo box 1 to the towball carrier 200. It may be sufficient to only utilising the second portion 202 of the towball carrier 200 arranged through the mounting opening 171 of the second mounting portion 17 of the inflatable cargo box 1 and the third portion 203a-b of the towball carrier arranged through the mounting openings 191a-b of the third mounting portion 19 of the inflatable cargo box 1 to fasten the inflatable cargo box 1 to the towball carrier 200.

As shown in Fig. 2, the inner wall 10a of the inflatable cargo box 1 comprises a valve 23. The at least one valve 23 is, preferably, provided in the inner wall 10a to make it difficult for unauthorized people to tamper with the valve 23.

The inflatable cargo box 1, as shown in Figs. 2, 3a, and 7, comprises cargo fastening means 22 arranged on the inner wall 10a for securing cargo. Cargo can be secured by e.g., arranging a rope or a tension strap through the fastening mean 22.

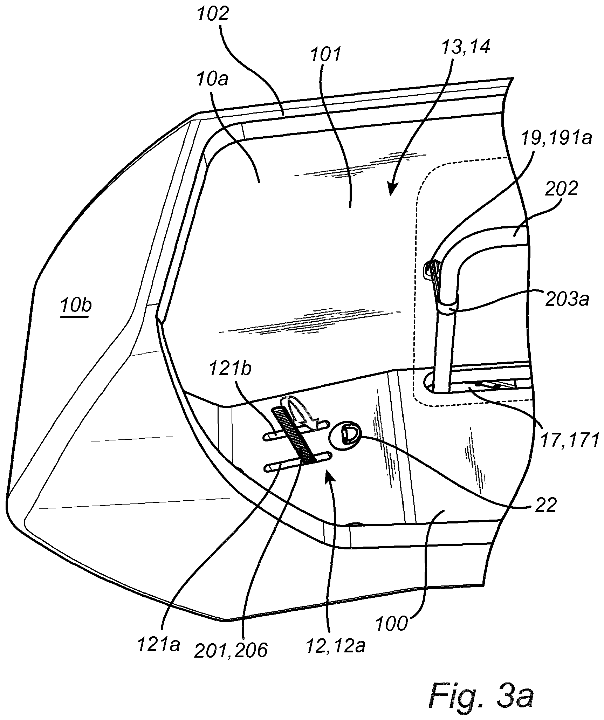

With reference to Figs. 3a-c, a detailed view of how the inflatable cargo box 1 is fastened to the towball carrier 200 is shown. A first portion 201 of the towball carrier 200 is arranged to extend through a first mounting opening 121a of one pair 12a of mounting openings 121a-b, as shown in Fig. 3a. The first portion 201 of the towball carrier 200 being a fastening member 206 of the towball carrier 200. After the fastening member 206 has been inserted through the first mounting opening 121a of one pair 12a of mounting openings 121a-b it is configured to be inserted through a second mounting opening 121b of the pair 12a of mounting openings, as indicated by an arrow in Fig. 3a. Put differently, the fastening member 206 is configured to extend into the cargo space 13 by inserting the fastening member 206 through the first mounting opening 121a. Thereafter the fastening member 206 is configured to be inserted into the second mounting opening 121b such that the fastening member 206 is extending out from the inflatable cargo box 1, as shown in Fig. 3b.

As further shown in Fig. 3b, the towball carrier 200 comprises two fastening members 206 at one side, and thus the inflatable cargo box 1 is provided with two pairs 12a of mounting openings 121a-b on each side of the base portion 100.

The fastening member 206 of the towball carrier 200, as shown in Figs. 2-4, and 6, is a fastening strap 206 configured to fasten bicycles to the towball carrier 200. The fastening straps 206 have a surface structure such that when the fastening strap 206 is inserted into the locking mechanism 207, the fastening strap 206 is prevented to be loosened unintentionally. When the fastening strap 206 is engaged with the locking mechanism 207, the inflatable cargo box 1 is fastened to the towball carrier 200. The fastening strap 206 can be released by opening the locking mechanism 207.

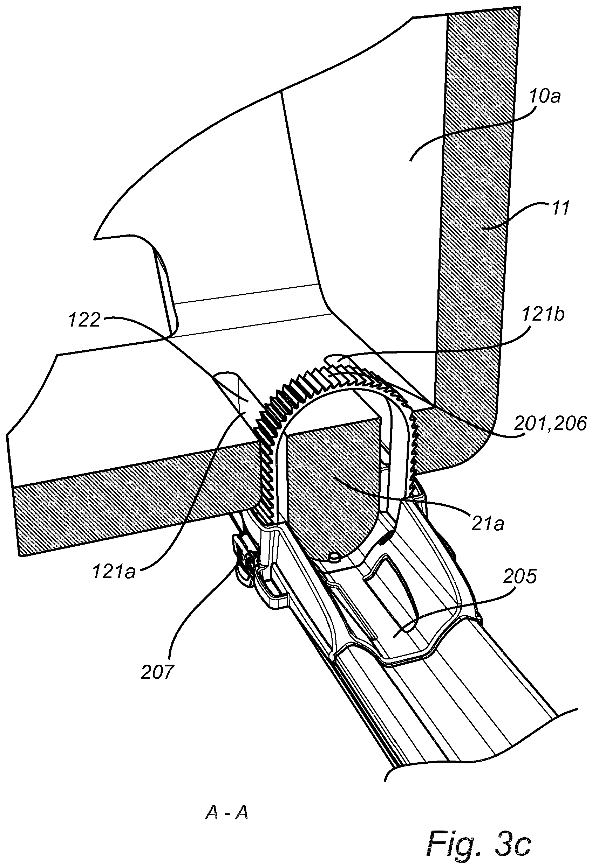

Fig. 3c show a cross sectional view of how the first portion 201 of the towball carrier 200 is arranged through the two mounting openings 121a-b of one pair 12a of mounting openings 121a-b. The first portion 201 is bridging a distance between the first mounting opening 121a and the second mounting opening 121b.

The double wall structure comprises an inner wall 10a and an outer wall 10b, wherein the inner wall 10a is connected to the outer wall 10b so as to define at least one enclosed space 11 therebetween. The inner wall 10a and the outer wall 10b are connected at the mounting opening 121a-b of the first portion 201 by a peripheral wall 122 of the mounting opening 121a-b, as shown in Fig. 3c. As shown in Figs. 1-4, and 7, the inner wall 10a and the outer wall 10b are connected at each opening 14, 121a-b, 171, 191a-b of the inflatable cargo box 1 by a peripheral wall 122 of the respective opening 14, 121a-b, 171, 191a-b. However, in another variant, the inner wall 10a and the outer wall 10b may be connected at an opening by having the inner wall 10a and the outer wall 10b joint together by using e.g., adhesives or welding.

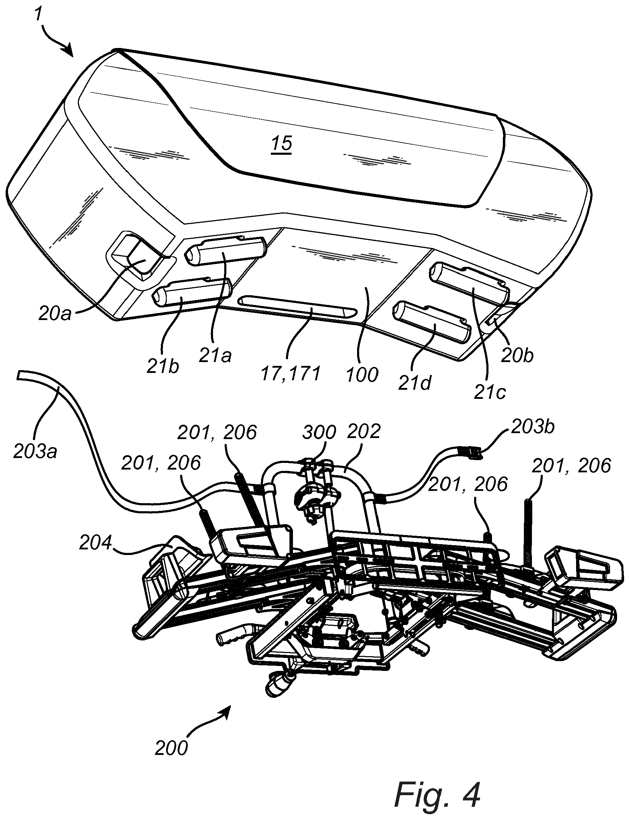

With reference to Fig. 4, the inflatable cargo box 1 and the towball carrier 200 are shown separately and viewed such that an underside of the base portion 100 is visible.

The inflatable cargo box 1 comprises mounting portions provided in the form of two mounting grooves 20a-b and four mounting protrusions 21a-d, as shown in Fig. 4. The mounting grooves 20a-b have a shape corresponding to a respective fourth portion 204 and the mounting protrusions 21a-d have a shape corresponding to a respective fifth portion 205 of the towball carrier 200. The mounting grooves 20a-b and protrusions 21a-d are configured to be placed relative the fourth 204 and fifth portion 205. In Fig. 3c, it is disclosed how a mounting protrusion 21a is placed relative a respective fifth portion 205. The fifth portion 205 being configured to hold a wheel of a bicycle when the inflatable cargo box 1 is not mounted.

As shown in Fig. 4, the lid 15 covers the entire cargo opening 14 and forms a closed opening.

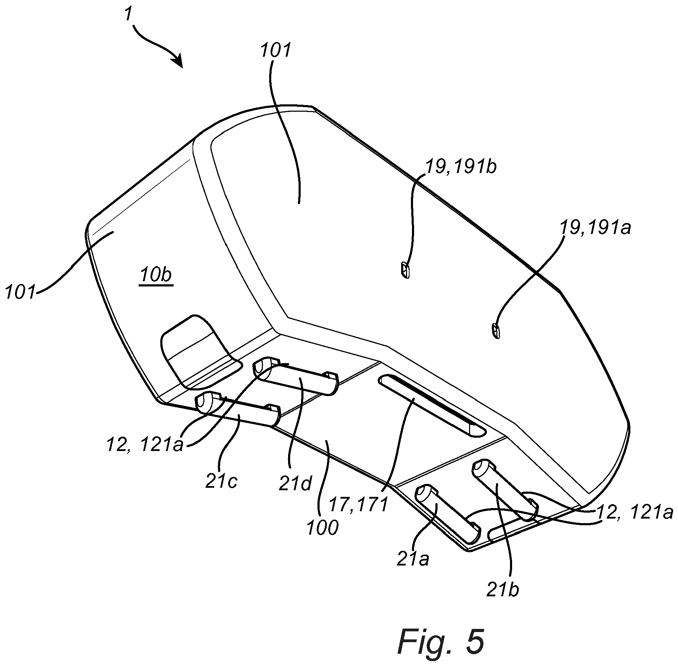

In Fig. 5, a rear perspective of a variant of the inflatable cargo box 1 is shown. Here, the base portion 100 is provided with mounting portions 12 in the form of mounting protrusions 21a-d, where the mounting protrusions are arranged on an outwards facing surface of the base portion 100. Here, the mounting protrusions 21a-d are provided with mounting openings 121a. The mounting openings 121a are arranged as through-holes in the respective mounting protrusion 21a-d. The through-holes have a respective extension substantially parallel with an extension of the outward facing surface of the base portion 100.

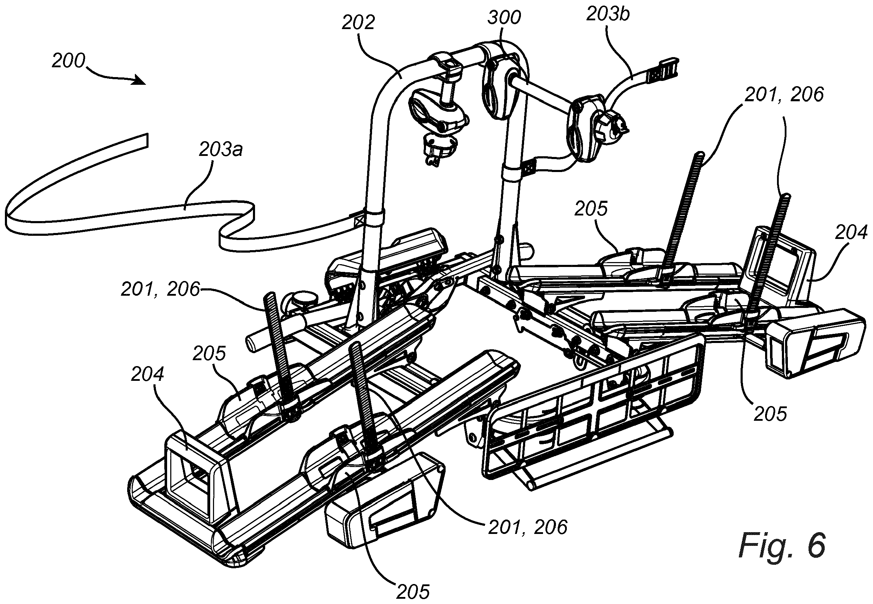

With reference to Fig. 6, the towball carrier 200 is a bike carrier configured to carry at least one bicycle. However, it is to be noted that the towball carrier 200 may be a towball carrier 200 of another type than a bicycle carrier. The towball carrier may be a specially adapted towball carrier for the inflatable cargo box 1. The towball carrier may be any sort of towball carrier which comprises at least one portion suitable to be received by a mounting portion 12, 17, 19 of the inflatable cargo box 1.

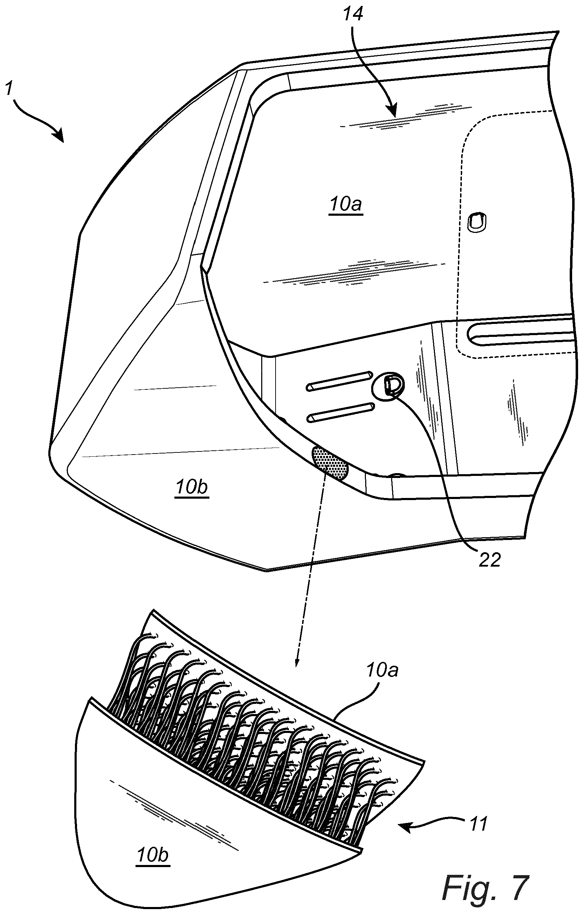

With reference to Fig. 7, the double wall structure is formed of dropstitch material. By having the inner and outer wall 10a-b being connected by dropstitch technique, it enhances the rigidity and stability of the inflatable cargo box 1.

The inner and/or outer wall 10a-b may be formed by several layers of material which are joint together. In such a case, the stiches are formed between an outer layer of the respective inner and outer walls 10a-b which faces each other.

Even though it is preferred that the inflatable cargo box is designed in accordance with the disclosure in the detailed disclosure and the appended drawings, it should be noted that a specific preferred embodiment of a specific component does not necessarily have to be combined with a specific embodiment of another component. Thus, advantages associated with a specific embodiment, including one or more features, of a specific component may be accomplished even though the other component s is/are designed in accordance with the more general disclosure under the summary of the invention rather than being defined in accordance with the specific embodiment disclosed in the detailed description.

It is contemplated that there are numerous modifications of the embodiments described herein, which are still within the scope of the invention as defined by the appended claims.

The inflatable cargo box may for instance comprise one base portion and one side portion which are formed by the double wall structure and are thus inflatable, and three other side portions and a top portion which are formed by a single wall structure. Wherein the single wall structure is formed by a flexible textile.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. An inflatable cargo box (1) adapted to be mounted on a towball carrier (200), the inflatable cargo box (1) comprising:
a base portion (100) and at least one side portion (101), wherein the base portion and/or the at least one side portion (100, 101) is formed by a double wall structure comprising an inner wall (10a) and an outer wall (10b), wherein the inner wall (10a) is connected to the outer wall (10b) so as to define at least one enclosed space (11) therebetween, wherein the inner wall (10a) or the outer wall (10b) is provided with at least one valve (23) configured to permit fluid into the enclosed space (11) so as to bring the inflatable cargo box (1) to an inflated state;
a first mounting portion (12) provided on the base portion or the at least one side portion (100, 101), the first mounting portion (12) configured to receive at least a first portion (201) of the towball carrier (200); wherein
the inner wall (10a), in the inflated state, is facing a cargo space (13), the cargo space (13) being accessible through a cargo opening (14), the inflatable cargo box (1) being provided with a lid (15) configured for at least partially covering the cargo opening (14).

2. The inflatable cargo box (1) according to claim 1, wherein the inflatable cargo box (1), in a deflated state, is bringable to a folded state in which the inflatable cargo box (1) occupies a volume that corresponds to at most 20% of a volume occupied by the inflatable cargo box (1) in said inflated state.

3. The inflatable cargo box (1) according to any one of preceding claims, wherein the first mounting portion (12) comprises at least one mounting opening (121a-b), wherein the at least one mounting opening (121a-b) is configured to receive the at least a first portion (201) of the towball carrier (200).

4. The inflatable cargo box (1) according to claim 3, wherein the base portion (100) is formed by the double wall structure, and wherein the at least one mounting opening (121a-b) of the first mounting portion (12) is arranged through said base portion (100).

5. The inflatable cargo box (1) according to any one of preceding claims, wherein the first mounting portion (12) comprises at least one pair (12a) of mounting openings (121a-b), each pair (12a) of mounting openings (121a-b) being configured for receiving a fastening member (206) of the towball carrier (200) so as to fixedly attach inflatable cargo box (1) the towball carrier (200).

6. The inflatable cargo box (1) according to any one of preceding claims, wherein the inflatable cargo box (1) comprises a second and/or a third mounting portion (17, 19), the second and the third mounting portion (17, 19) comprises at least one mounting opening (171, 191a-b) arranged through the base portion (100) or arranged through one of the at least one side portions (101), wherein the at least one mounting opening (171, 191a-b) of the second and third mounting portion (17, 19) is, respectively, configured to receive at least a second or a third portion (202, 203a-b) of the towball carrier (200).

7. The inflatable cargo box (1) according to claim 6, wherein the inner wall (10a) comprises a cover portion (18) arranged to cover the at least one mounting opening (121a-b,171, 191a-b) of the first, second and/or third mounting portion (12, 17, 19) such that respective portion (201, 202, 203a-b) of the towball carrier (200) is covered when the inflatable cargo box (1) is in a mounted state.

8. The inflatable cargo box (1) according to any one of preceding claims, wherein the inner and the outer wall (10a-b) defines at least two enclosed spaces (11), wherein the at least two enclosed spaces (11) are fluidly isolated from each other, and wherein the inner wall (10a) or the outer wall (10b) is provided with two valves (23), each valve (23) being configured to permit fluid into a respective enclosed space (11).

9. The inflatable cargo box (1) according to claim 8, wherein the base portion (100) and the at least one side portion (101) is formed by the double wall structure, and wherein one of the at least two enclosed spaces (11) are provided in the base portion (100) whereas another of the at least two enclosed spaces (11) are provided in the side portion (101).

10. The inflatable cargo box (1) according to any one of preceding claims, wherein the towball carrier (200) is a bike carrier configured to carry at least one bicycle.

11. The inflatable cargo box (1) according to any one of preceding claims, wherein the lid (15) is formed by the double wall structure.

12. The inflatable cargo box (1) according to any one of claims 1-10, wherein the lid (15) is made of a flexible textile.

13. The inflatable cargo box (1) according to any one of preceding claims, wherein a first portion (151) of the lid (15) is fixedly connected to the double wall structure, and a second portion (152) of the lid (15) is connectable to the double wall structure.

14. The inflatable cargo box (1) according to claim 13, wherein the second portion (152) of said lid (15) is connectable to the double wall structure by a at least one of a zipper, a button, or Velcro.

15. The inflatable cargo box (1) according to any one of preceding claims, wherein in the double wall structure is formed of dropstitch material.
